# EUROPEAN PATENT SPECIFICATION

(11) **EP 2 002 724 B1**
(45) Date of publication and mention of the grant of the patent: **11.11.2009**
(21) Application number: 07011555.5
(22) Date of filing: 13.06.2007
(51) Int. Cl.: A21B 5/02, A21B 3/18

(54) **Apparatus for producing baked confectionery product and method for producing the same**
Vorrichtung zur Herstellung gebackener Süsswaren und Verfahren zu deren Herstellung
Appareil pour produire de la confiserie cuite et son procédé de fabrication

(43) Date of publication of application: 17.12.2008
(73) Proprietor: Masdac Co., Ltd., Tokorozawa Saitama 359-1147 (JP)
(72) Inventor: Morikawa, Shoji, c/o Morikawa Food Mach., Co., Aisai-city, Aichi 496-8003 (JP)
(74) Representative: Banzer, Hans-Jörg

(56) References cited:
- EP-A- 1 021 955
- GB-A- 269 551
- GB-A- 569 397
- GB-A- 1 338 979
- GB-A- 2 135 178
- JP-A- 50 082 277
- US-A- 2 048 011
- US-A- 2 750 875

## Description

### Field of the Invention

The present invention relates to an apparatus and a method for producing a baked confectionery product, such as a fish-shaped pancake, a figure-shaped pancake and a maple leaf-shaped pancake, using a mating die unit comprising a pair of dies.

### Background of the Invention

A baked confectionary product such as a fish-shaped pancake, figure-shaped pancake and maple leaf-shaped pancake having filling enclosed therein is produced using a mating die unit comprising rotatably connected front and back dies each having a die cavity in mating faces. An exemplary method for producing the baked confectionary product will be explained briefly. First, dough is deposited in each of the die cavities of the dies and then filling is deposited on one of the dough. And, the dies are mated and then heated for baking the dough. After the baking, the upper die is rotated for opening the die unit and a baked product is taken out.

In such a method, when the upper die rotates for opening the die unit after the baking, the product sometimes attaches to the rotated upper die without being kept in the lower die depending on an amount of oil coated on the die cavity or age softening of the die. Such the product, attached to the upper die, may be kept as it is or fall on portion other than the die cavity of the lower die. Since the means for taking the product out of the die unit after the die opening is designed to take the product out of the die cavity of the lower die, the product on the portions other than the die cavity of the lower die will be wasted or fall in inside of the apparatus thereby to cause trouble to the apparatus.

Meanwhile, apparatuses for producing a baked confectionary product designed to ensure releasing the product from the die have been developed. In an apparatus disclosed in Japanese Patent Application No.2005-278622. a die (lower die) in which the baked product remains is reversed so that the product will fall out of the die by its own weight. And, in an apparatus disclosed in Japanese Patent Application No.H08-131056, a die (lower die) in which the baked product remains is reversed and further hit with a hammer on the backside of the die so as to drop the product out of the die surely.

US 2 750 875 discloses an apparatus according to the preamble of claim 1.

### Summary of Invention

An object of the present invention is to provide an apparatus and a method for producing a baked confectionary product improved so as to keep the baked product in the lower die surely when the dies are opened.

According to the present invention, this object is achieved by an apparatus for producing a baked confectionary product as defined in claim 1 and a method for producing a baked confectionary product as defined in claim 4. The dependent claims define preferred and advantageous embodiments of the invention.

An apparatus for producing a baked confectionary product according to the present invention uses a mating die unit comprising a pair of dies each having die cavity in which dough is deposited. The apparatus comprises: a circulating transfer means of said die unit; a dough depositing means; a heating means of said die unit; a mating means of said dies; an opening means of said dies; and a means for keeping a baked product in the lower die at the die opening; wherein said baked product keeping means comprising: a means for forming a gap between said dies; a nozzle for blowing air to said die cavity of the upper die through the gap; and a means for sticking a claw member to a side portion of the baked confectionary product through the gap.

According to the present invention, when the dies are opened by rotating the upper die, the baked product keeping means can prevent the baked product from attaching to the upper die and displacing at the die rotation whereby the product can be kept in the lower die without fail. Accordingly, the baked product can be taken out of the die unit unmistakably. And, since the baked product keeping means has double measures for keeping the product in the lower die, comprising blowing air to the die cavity of the upper die through the gap between the upper and lower dies and sticking the claw member into the product in the die unit through the gap, the product can be kept at the predetermined position of the lower die.

In the present invention, the circulating transfer means is preferably a slide conveyer, and the gap forming means is preferably a rail arranged over the side rail of the slide conveyer and extending parallel to the slide conveyer. And, the upper die runs on the rail as transferred by the slide conveyer, causing a gap between the upper and lower dies, and the nozzle, which is arranged along the gap, blows air to the die cavity of the upper die.

In this case, transferring of the die unit causes formation of the gap between the upper and lower dies automatically. And, the die unit is transferred while keeping the gap.

And, in the present invention, the claw sticking means is preferably slidable in a direction perpendicular to the transfer direction of the circulating transfer means.

A method for producing a baked confectionary product according to the present invention is a method for producing the baked product by transferring a mating die unit comprising a pair of dies each having die cavity in which dough is deposited. The method comprises the following steps: a step for depositing dough in the die cavities of the dies; a step for mating the dies; a step for heating the mated dies from the back surface of the die unit while being reversed for baking the dough from both sides; and a step for opening the mated dies and taking a baked product out of the die unit. And, the step for taking out the product comprises the following steps; a step for forming a gap between the dies; a step for blowing air to the die cavity of the upper die through the gap so that the product that remains in the upper die is falling into the lower die and a step for rotating the upper die fully after sticking a claw member into the product in the lower die so as to keep the product in the lower die.

As mentioned above, the present invention can provide an apparatus and a method for producing a baked confectionery product in which the baked product is kept in the lower die cavity surely at the die opening.

### Brief Description of the Drawings

Figs.1 are drawings showing the mating die unit; Fig.1A is a plane drawing showing the opened die unit and Fig.1B is a side drawing showing the mated die unit;
Figs.2 are drawings showing a whole structure of the apparatus for producing a baked confectionary product according to the present invention; Fig.2A is a front elevation drawing and Fig.2B is a side drawing;
Fig.3 is a drawing showing a process for producing the baked confectionary product;
Fig.4 is an elevation drawing showing the gap forming means;
Fig.5 is a side drawing showing a process for forming the gap;
Fig.6 is a plane drawing showing the nozzle array section;
Fig.7 is an elevation drawing showing the nozzle array section;
Fig.8 is a plane drawing showing the claw sticking means;
Fig.9 is an elevation drawing showing an example of the driving mechanism of the claw sticking means; and
Fig.10 is an elevation drawing showing an example of the mechanism for rotating the upper die.

### Detailed Description of Embodiment of the Invention

Hereinafter, a preferred embodiment of the present invention will be concretely described with reference to the drawings.

First, a baked confectionary product produced using an apparatus according to the present invention will be explained.

The baked confectionary product is produced by baking dough comprising flour, egg, sugar and the like in which filling such as bean jam and cream is enclosed. The product may be formed into various shapes such as a face of animal and cartoon's characters.

The baked confectionery product is produced by using a mating die unit.

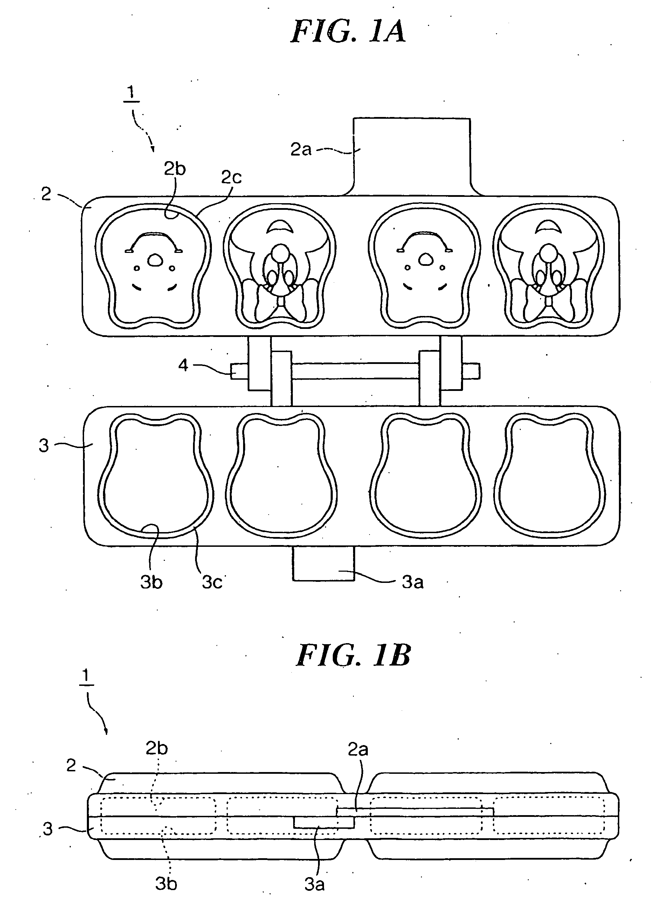

Figs.1 are drawings showing the mating die unit; Fig.1A is a plane drawing showing the opened die unit and Fig.1B is a side drawing showing the mated die unit.

The mating die unit 1 comprises a pair of rectangular-shaped front die 2 and back die 3 which are connected so as to rotate by a hinge 4 at the long side of each die. The front die 2 is formed with a knob 2a extending forward from its front edge and the back die 3 is formed with a knob 3a extending forward from its front edge. These knobs 2a and 3a are out of alignment in the horizontal direction and the knob 2a of the front die 2 is larger in size than the knob 3a of the back die 3.

Each of the dies 2 and 3 has four die cavities 2b and 3b aligning in the horizontal direction. The die cavities 2b and 3b are faced each other so that the faced cavities 2b and 3b form a molding space as shown in Fig.1B when the dies 2 and 3 are mated. The molding space may have a design showing a face of animal or cartoon's characters. As shown in Fig. 1A, each of the die cavities 2b of the front die 2 has a bottom surface with patterned indents showing a front face of the design and each of the die cavities 3b of the back die 3 has a flat bottom surface. Each of the die cavities 2b and 3b is rimmed with raised edge 2c and 3c.

An apparatus for producing a baked confectionary product according to the present invention will be explained.

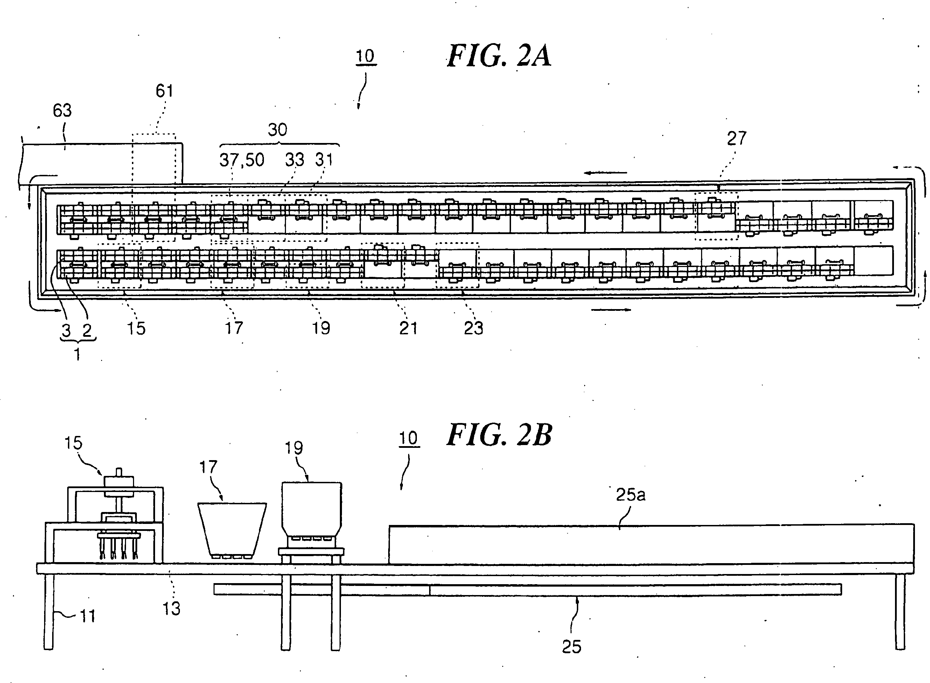

Figs.2 are drawings showing a whole structure of the apparatus for producing a baked confectionary product according to the present invention; Fig.2A is a front elevation drawing and Fig.2B is a side drawing.

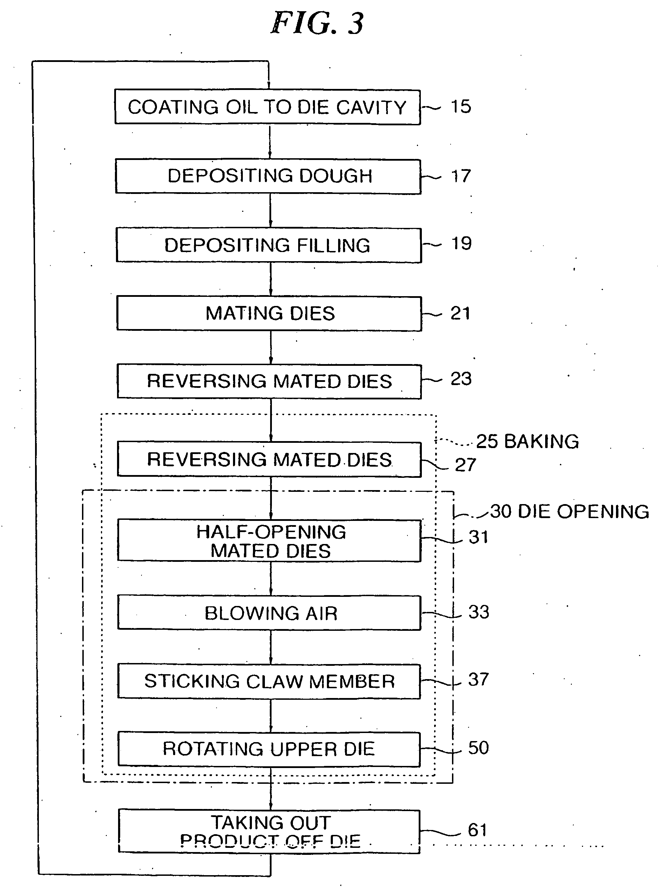

Fig.3 is a drawing showing a process for producing the baked confectionary product.

The apparatus 10 comprises a circulating transfer means for transferring pluralities of die units 1 counterclockwise of Fig.2A in a state in which the die units 1 are longitudinally arranged. Each of the die units 1 is transferred counterclockwise from a start position, located at leftmost position of the lower pass of the circulating pass shown in Fig.2A. The circulating transfer means is a slide conveyer 13 arranged on a base 11 along on the circulating pass. The slide conveyer 13 travels intermittently with a slide distance of a length of the die unit 1 and a stop period of about 5 seconds.

On the circulating pass are arranged a means 15 for coating oil to the die cavities 2b and 3b of the front and back dies 2 and 3; a means 17 for depositing dough on the die cavities 2b and 3b; a means 19 for depositing filling; a means 21 for mating the opened dies 2 and 3; a means 25 for heating the mated dies for baking the dough; a means 30 for opening the mated dies; and a means 61 for taking the baked product out of the die, in the order from the start position. The die opening means 30 contains a means for keeping the baked product in the lower die as described below.

A process for producing a baked confectionary product according to the present invention will be explained.

The mating die unit 1 is prepared in an opened state and then transferred to the oil coating station 15 (the means for coating oil) by the slide conveyer 13 at which the die cavities 2b and 3b of the front and back dies 2 and 3 are coated with oil. And, the die unit 1 is transferred to a dough depositing station 17 (the means for depositing dough) at which dough is deposited on the die cavities 2b and 3b and then transferred to the filling depositing station 19 (the means for depositing filling) at which filling such as bean jam and cream is deposited on the dough deposited on the die cavities 2b of the front die 2 in the embodiment. Thereinafter, the die unit 1 is transferred to the dies mating station 21 (the means for mating the opened dies) at which the dies 2 and 3 are mated by rotating the front die 2 toward the back die 3. Then, the die unit 1 is transferred to the reversing station 23 (the means for reversing the die unit) for reversing the die unit 1 upside down whereby the front die 2 is placed at the bottom and the back die 3 is placed at the top. This allows the filling being positioned at a thickness center of the dough.

Then, the die unit 1 is transferred to the baking station 25 (a means for heating the mated die) which is a burner arranged under the slide conveyer 13. The die unit 1 is heated by the burner at the back surface for baking the dough from the upper side. At the midstream of the baking station 25, the die unit 1 is reversed upside down at the reversing station 27 whereby the back die 3 is placed at the bottom and the front die 2 is placed at the top in order to bake the dough from the back side. The baking station 25 is arranged along the circulating pass to the die opening means 30. A total baking time is about 3 minutes. Almost of the baking station 25 is covered with a cover 25a.

At the downstream of the baking station 25, the die opening means 30 is arranged, which has a means for keeping the baked product in the lower die (the back die 3, in this embodiment) without attaching to the upper die (the front die 2, in this embodiment) and a means for rotating the upper die. After the die opening at the die opening means 30, the die unit 1 is transferred to the taking out means 61 for taking the baked confectionery product out of the die and sifting it to a cooling conveyer 63.

The means for keeping the baked product to the lower die will be explained.

The means 30 comprises a means for forming a gap between the front and back dies 2 and 3; a nozzle 33 for blowing air to the die cavities of the upper die through the gap and a means for sticking a claw member into the baked confectionery product through the gap.

The gap forming means will be explained.

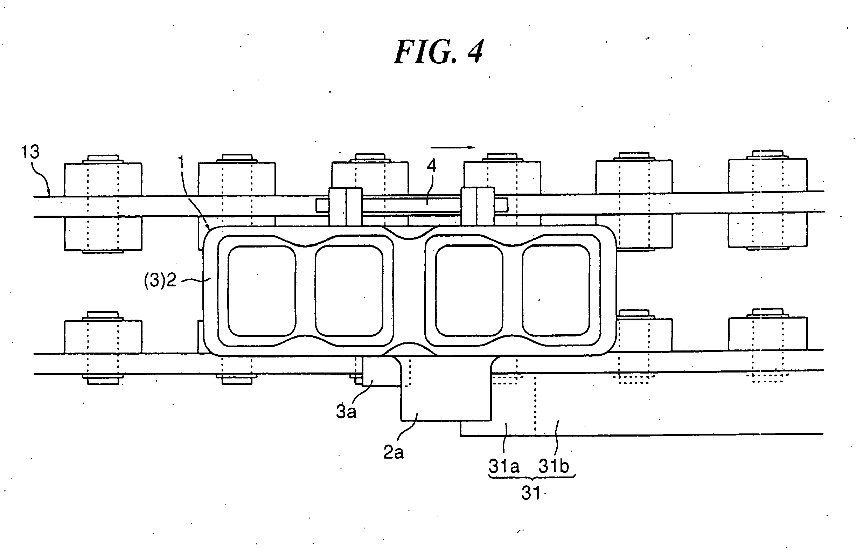

Fig.4 is an elevation drawing showing the gap forming means.

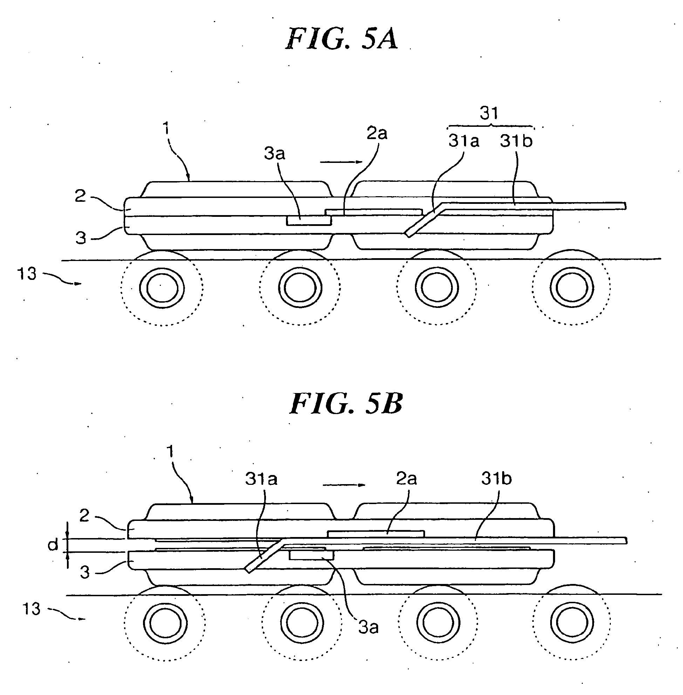

Fig.5 is a side drawing showing a process for forming the gap.

The gap forming means is a rail 31 extending above the outer rail of the slide conveyer 13 as shown in Fig.4. The rail 31 has an upstream portion 31a sloping upwardly to the downstream and a downstream portion 31b parallel to the transfer plane of the slide conveyer 13. The die unit 1 is transferred to the rail 31 in a state in which the front die 2 is place at the top and the back die 3 is placed at the bottom. When the die unit 1 reaches the rail 31, as shown in Fig.5A, the knob 2a of the front die 2 runs on the upstream portion 31a of the rail 31. The knob 3a of the back die 3 is not long enough to run on the upstream portion 31a. As the die unit 1 travels, as shown in Fig.5B, the knob 2a of the front die 2 runs on the downstream portion 31b. This lifts the front die 2 thereby to form a gap d (Fig.5B, several mm) between the front and back dies 2 and 3. The rail 31 elongates to the taking out station 61.

The half-opened die unit 1 is transferred to a section where pluralities of nozzle are arranged (referred to as a nozzle array section).

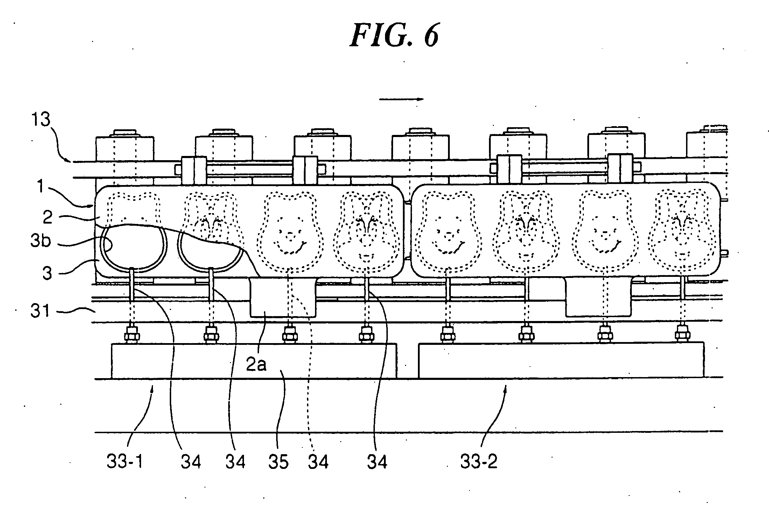

Fig.6 is a plane drawing showing the nozzle array section.

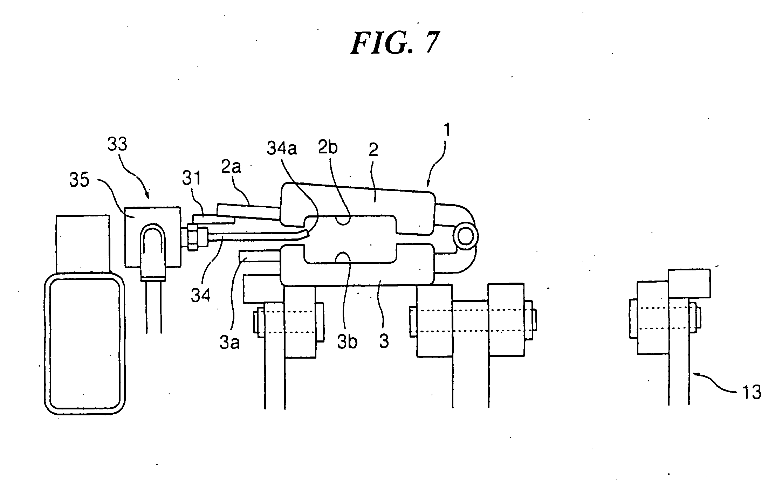

Fig.7 is an elevation drawing showing the nozzle array section.

In the nozzle array section 33, four air nozzles 34 are arranged in the transfer direction and faced to each die cavity of the die unit 1. Each of the nozzles 34 extends in a direction perpendicular to the transfer direction and is inserted into the forming cavity of the die 1 through the gap between the front and back dies 2 and 3 from between the slide conveyer 13 and the rail 31. As shown in Fig.7, a tip of each nozzle 34 faces to the die cavity of the upper die (the front die 2 in this embodiment). The nozzles 34 are communicated with a common pipe 35 from which air is supplied to each nozzle 34 and blown toward the die cavity from the tip 34a of the nozzle 34. The blowing time is about 1 to 2 seconds. By blowing air toward the die cavity 2b of the upper front die 2, the baked confectionary product that may remain in the front die 2 is forced to fall.

As shown in Fig.6, two of the nozzle array sections 33 are set along the transfer pass continuously. The reason is as follows. The air blowing at the first nozzle array section 33-1 cools the baked product thereby to shrink the baked product. The shrinkage of the baked product makes it easy to detach the product from the front die 2. Then, by blowing air again at the second nozzle array section 33-2, the product that may remain in the upper die is forced to fall.

After the nozzle array section 33, the die unit 1 is transferred to the claw sticking means 37.

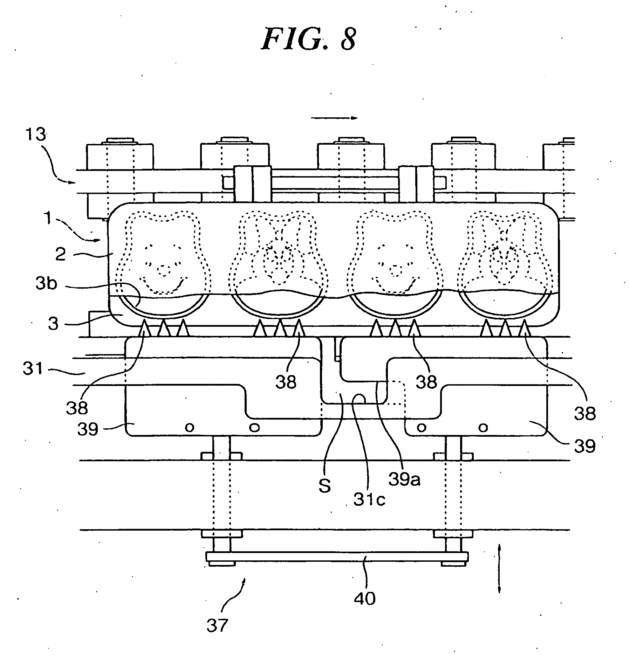

Fig.8 is a plane drawing showing the claw sticking means.

In the claw sticking means 37, four fork-like claw members 38 are arranged in the transfer direction and faced to each die cavity of the die unit 1. The claw members 38 are mounted to a plate 39 which is supported horizontally between the slide conveyer 13 and the rail 31 by a shaft 40. The shaft 40 is slidably mounted in a direction perpendicular to the transfer direction.

When the die 1 is transferred to the claw sticking means 37, the shaft 40 slides inwardly so that each claw member 38 sticks into the side portion of the baked confectionery product remaining in the forming cavity through the gap between the front and back dies 2 and 3. Immediately thereafter, the front die 2 is rotated upwardly for opening the die unit 1. During the opening, the baked product is kept being stuck with the claw member 38 and held in the back die 3 without attaching to the front die 2. And, the baked product is not displaced at the upper die rotation. Accordingly, if the baked product remains in the front die 2 after passed the nozzle array section 33, the baked product is held in the back die 3 without fail. After the die opening, the shaft 40 slides outwardly so that the claw member 38 is detached from the product.

A driving mechanism of the claw sticking means 37 will be explained.

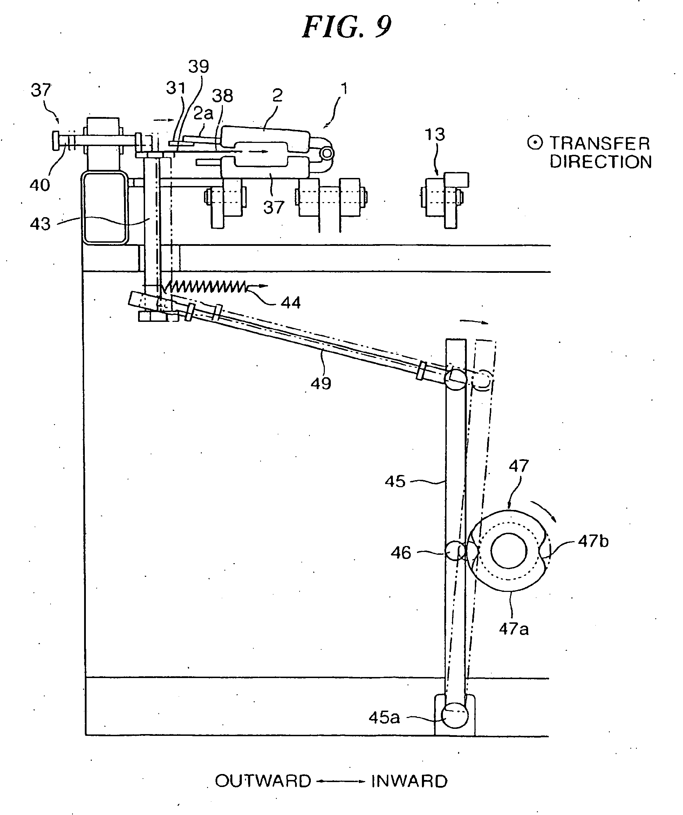

Fig.9 is an elevation drawing showing an example of the driving mechanism of the claw sticking means.

As mentioned above, the shaft 40 of the claw sticking means 38 is slidably mounted in a direction perpendicular to the transfer direction. The plate 39 of the claw sticking means 38 is formed with a bar 43 extending downwardly perpendicular to the plane of the plate 39. The bar 43 is biased inwardly in a direction perpendicular to the transfer direction by a spring 44 at the lower end. On the base under the slide conveyer 13, a lever 45 is mounted rotatably in a direction perpendicular to the transfer direction along a supporting point 45a. The lever 45 is connected to the bar 43 by a link arm 49 both ends of which are rotatably connected to the upper end of the lever 45 and the bottom end of the bar 43.

The lever 45 has a cam follower 46 at the approximately middle portion thereof. The cam follower 46 is engaged with a cam 47 mounted on a drive shaft (not shown) powered by a motor (not shown). The cam 47 has a circumferential cam surface 47a and a concave cam surface 47b.

In a state where the cam follower 46 is in engagement with the circumferential cam surface 47a of the cam 47, as shown in a solid line of Fig.9, the lever 45 is supported substantially straight and the shaft 40 is positioned at an outermost position at which the claw member 38 is kept away from the die 1. When the cam follower 46 engages with the concave cam surface 47b by rotating the cam 47, as shown in a chain double-dashed line of Fig.9, the lever 45 is caused to rotate inwardly. This moves the bar 43 and, in turn the plate 39, inwardly by the link arm 49. As a result, the claw member 38 sticks into the baked product. When the cam follower 46 engages with the circumferential cam surface 47a again by further rotating the cam 47, the lever 45 is caused to rotate outwardly until the original straight position. This moves the bar 43 outwardly and thus the claw member 38 is detached from the baked product.

A mechanism for rotating the upper die will be explained.

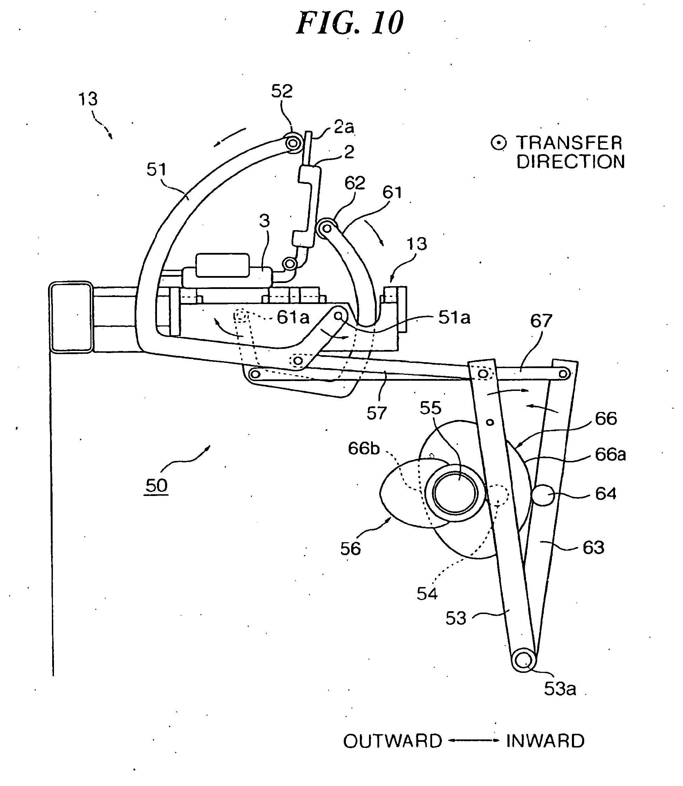

Fig.10 is an elevation drawing showing an example of the mechanism for rotating the upper die.

The mechanism 50 for rotating the upper die is set at the same position as the claw sticking means 37 and is provided with a die rotating arm 51 for pushing up the knob 2a of the front die 2 and a die receiving arm 61 for supporting the die 2 and opening it fully.

When the front die 2 is opened, the die receiving arm 61 is held at a die receiving position in which the arm 61 receives the front die 2. Then, after keeping the product in the lower die with being stuck by the claw member 38, the die pushing arm 51 is rotated to a die pushing up position at which the front die 2 is pushed up and rotated around the hinge 4 (Fig. 1A) until an angle between the front and back dies 2 and 3 is over 90°, at which the front die 2 is supported by the die receiving arm 61. And, after detaching the claw member 38 from the baked product, the die receiving arm 61 is retracted so as to rotate the front die 2 until an angle between the front and back dies 2 and 3 is 180°.

The die opening arm 51 has a substantially C-shape and is provided with a roller 52 at its distal end. The die opening arm 51 is mounted to a frame under the slide conveyer 13 at its proximal end 51a in a rotatable manner between the die pushing up position, in which the arm 51 projects through the slide conveyer 13 and pushes the front die 2 until an angle between the front and back dies 2 and 3 is over 90°, and a retracting position, in which the arm 51 is retracted under the slide conveyer 13. During the rotating, the arm 51 passes through a space formed by a cut-out portion 39a of the plate 39 of the claw sticking means 37 and a cut-out portion 31a of the rail 31 as shown in Fig.8. On the base under the slide conveyer 13, a die opening lever 53 is mounted rotatably in a direction perpendicular to the transfer direction along a supporting point 53a. The lever 53 is connected to the die opening arm 51 by a link arm 57 both ends of which are rotatably connected to the upper end of the lever 53 and the die opening arm 51 at a position distally away from the distal end 51a thereof.

The die opening lever 53 has a cam follower 54 at the approximately middle portion thereof. The cam follower 54 is engaged with a cam axis 55 powered by a motor (not shown) and formed with a cam 56 which protrudes outwardly in a lobe shape from a part of the circumference surface of the cam axis 55.

In a state where the cam follower 54 is in engagement with the circumferential surface of the cam axis 55, as shown in Fig.10, the lever 53 is supported obliquely outwardly and the die opening arm 51 is positioned at the pushing up position.

When the cam follower 54 engages with the cam surface of the cam 56 by rotation of the cam axis 55, the lever 53 is caused to rotate inwardly. This rotates the die opening arm 51 counterclockwise to the retracting position by the link arm 57. When the cam follower 54 engages with the circumferential cam surface of the cam 56 again by further rotation of the cam axis 55, the lever 53 is caused to rotate outwardly. This rotates the die opening arm 51 clockwise to the pushing up position by the link arm 57 so as to push up the front die 2.

The die receiving arm 61 has a substantially C-shape and is provided with a roller 62 at its distal end. The die receiving arm 61 is mounted to the frame under the slide conveyer 13 at its proximal end 61a in a rotatable manner between a receiving position, in which the arm 61 projects through the slide conveyer 13 and receives the front die 2 which rotates until an angle between the front and back dies 2 and 3 is over 90°, and a retracting position, in which the arm 61 is retracted under the slide conveyer 13. On the base under the slide conveyer 13, a die receiving lever 63 is mounted rotatably in a direction perpendicular to the transfer direction along a supporting point 53a. The lever 63 is connected to the die receiving arm 61 by a link arm 67 both ends of which are rotatably connected to the upper end of the lever 63 and the die receiving arm 61 at a position distally away from the distal end 61a thereof.

The die receiving lever 63 has a cam follower 64 at the approximately middle portion thereof. The cam follower 64 is engaged with a cam 66 mounted on the cam axis 55. The cam 66 has a large diameter circumferential surface 66a located opposite the cam 56 and a concave surface 66b.

In a state where the cam follower 64 is in engagement with the large diameter circumferential surface 66a of the cam 66, as shown in Fig.10, the lever 63 is supported obliquely inwardly and the die receiving arm 61 is positioned at the receiving position.

When the cam follower 64 engages with the concave surface 66b of the cam 66 by rotation of the cam axis 55, the lever 63 is caused to rotate outwardly. This rotates the die receiving arm 61 clockwise to the retracting position by the link arm 67. When the cam follower 64 engages with the large diameter circumferential cam surface 66a of the cam 66 again by further rotation of the cam axis 55, the lever 63 is caused to rotate inwardly. This rotates the die receiving arm 61 counterclockwise to the die receiving position by the link arm 67.

After the die opening, the baked product remaining in the lower die 3 is transferred to the taking out means 61 for transferring to the cooling conveyer 63.

## Claims

1. An apparatus (10) for producing a baked confectionary product using a mating die unit (1) comprising a pair of dies (2, 3) each having die cavity (2b, 3b) in which dough is deposited comprising:
a circulating transfer means (13) of said die unit (1);
a dough depositing means (17);
a heating means (25) of said die unit (1);
a mating means (21) of said dies (2, 3);
an opening means (30) of said dies (2, 3); and
a means for keeping a baked product in the lower die (3) at the die opening;
wherein said baked product keeping means comprising:
a means (31) for forming a gap between said dies (2, 3); **characterized in that** said baked product keeping means further comprises
a nozzle (33, 34) for blowing air to said die cavity (2b) of the upper die (2) through the gap (d) forcing the baked confectionary product remaining in the upper die to fall in the lower die (3); and
a means (37) for sticking a claw member (38) to a side portion of the baked confectionary product through the gap (d) in order to keep the baked confectionary product in the lower die (3).

2. The apparatus (10) for producing a baked confectionery product according to claim 1,
wherein said circulating transfer means (13) is a slide conveyer (13), and
said gap forming means (31) is a rail (31) arranged over the side rail of said slide conveyer (13) and extending parallel to said slide conveyer (13),
wherein the upper die (2) runs on said rail (31) as transferred by said slide conveyer (13), causing a gap (d) between the upper and lower dies (2, 3), and
said nozzle (33, 34), which is arranged along said gap (d), blows air to said die cavity (2b) of the upper die (2).

3. The apparatus (10) for producing a baked confectionery product according to claims 1 or 2,
wherein said claw sticking means (37) is slidable in a direction perpendicular to the transfer direction of said circulating transfer means (13).

4. The apparatus for producing a baked confectionary product according to any one of claims 1 to 3,
wherein said circulating transfer means (13) transfers said mating die units (1) in a state in which said mating die units (1) are longitudinally arranged.

5. The apparatus for producing a baked confectionary product according to any one of claims 1 to 4,
wherein two of said nozzles (34) are set along said circulating transfer means (13) continuously, in which the first nozzle (34) blows air to the baked product in said die cavity (2b) of the upper die (2) to shrink the baked product and the second nozzle (34) blows air to said cavity (2b) of the upper die (2) to force the baked product to fall from the upper die (2).

6. A method for producing a baked confectionary product by transferring a mating die unit (1) comprising a pair of dies (2, 3) each having die cavity (2b, 3b) in which dough is deposited comprising the following steps:
a step (17) for depositing dough in the die cavities (2b, 3b) of the dies (2, 3);
a step (21) for mating the dies (2, 3);
a step (25) for heating said mated dies (2; 3) from the back surface of said die unit (1) while being reversed (27) for baking said dough from both sides; and
a step (30) for opening said mated dies (2, 3) and taking a baked product out of said die unit (1);
wherein the step (30, 61) for taking out the product comprises the following steps;
a step (31) for forming a gap (d) between said dies (2, 3);
a step (33) for blowing air to said die cavity (2b) of the upper die (2) through the gap (d) so that the product that remains in the upper die (2) is falling into the lower die (3); and
a step (50) for rotating the upper die (2) fully after sticking a claw member (38) into the product in the lower die (3) so as to keep the product in the lower die (3).

7. The method for producing a baked confectionary product by transferring a mating die unit (1) comprising a pair of dies (2, 3) each having die cavity (2b, 3b) in which dough is deposited according to claim 6,
wherein said step for blowing air in the step for taking out the product comprises the steps of:
a first step for blowing air to the baked product in said die cavity (2b) of the upper die (2) to shrink the baked product; and
a second step for blowing air to said cavity (2b) of the upper die (2) to force the baked product to fall from the upper die (2).

## Patentansprüche

1. Vorrichtung (10) zur Herstellung eines gebackenen Konfektproduktes, die eine Einheit (1) aus zusammenpassenden Formen, die ein Paar Formen (2, 3) umfasst, von denen jede eine Formhöhlung (2b, 3b) hat, in welche Teig eingefüllt wird, verwendet, umfassend:
- ein umlaufendes Transportmittel (13) der Formeneinheit (1);
- ein Teig einfüllendes Mittel (17);
- ein Heizmittel (25) der Formeneinheit (1);
- ein Mittel (21) zum Zusammensetzen der Formen (2, 3);
- ein Mittel (30) zum Öffnen der Formen (2, 3); und
- ein Mittel zum Halten eines gebackenen Produktes in der unteren Form (3) bei der Formöffnung;
wobei das Mittel zum Halten des gebackenen Produktes umfasst:
ein Mittel (31) zum Bilden eines Zwischenraums zwischen den Formen (2, 3), **dadurch gekennzeichnet, dass** das Mittel zum Halten des gebackenen Produktes außerdem umfasst:
eine Düse (33, 34) zum Blasen von Luft in die Formhöhlung (2b) der oberen Form (2) durch den Zwischenraum (d), die Druck auf das gebackene Konfektprodukt, das in der oberen Form geblieben ist, ausübt, damit es in die untere Form (3) fällt, und
ein Mittel (37) zum Stecken eines Greifelements (38) in den Seitenteil des gebackenen Konfektproduktes durch den Zwischenraum (d), um das gebackene Konfektprodukt in der unteren Form (3) zu halten.

2. Vorrichtung (10) zur Herstellung eines gebackenen Konfektprodukts gemäß Anspruch 1,
wobei das umlaufende Transportmittel (13) ein Gleitförderer (13) ist und
das Zwischenraum bildende Mittel (31) eine Schiene (31) ist, die über der Seitenschiene des Gleitförderers (13) angeordnet ist, und sich parallel zu dem Gleitförderer (13) erstreckt;
wobei die obere Form (2) an der Schiene (31) läuft, wenn sie durch den Gleitförderer (13) transportiert wird, was einen Zwischenraum (d) zwischen der oberen und der unteren Form (2, 3) verursacht, und
die Düse (33, 34), die entlang des Zwischenraums (d) angeordnet ist, Luft zu der Formhöhlung (2b) der oberen Form (2) bläst.

3. Vorrichtung (10) zur Herstellung eines gebackenen Konfektproduktes gemäß Anspruch 1 oder 2, wobei das Greifsteckmittel (37) in einer Richtung senkrecht zu der Transportrichtung des umlaufenden Transportmittels (13) verschiebbar ist.

4. Vorrichtung zur Herstellung eines gebackenen Konfektproduktes gemäß einem der Ansprüche 1 bis 3,
wobei das umlaufende Transportmittel (13) die Einheiten (1) aus zusammenpassenden Formen in einem Zustand transportiert, in dem die Einheiten (1) aus zusammenpassenden Formen längs angeordnet sind

5. Vorrichtung zur Herstellung eines gebackenen Konfektproduktes gemäß einem der Ansprüche 1 bis 4,
wobei zwei der Düsen (34) entlang des kontinuierlich umlaufenden Transportmittels (13) angeordnet sind, wobei die erste Düse (34) Luft zu dem gebackenem Produkt in der Formhöhlung (2b) der oberen Form (2) bläst, um das gebackene Produkt zu schrumpfen, und die zweite Düse (34) Luft in die Höhlung (2b) der oberen Form (2) bläst, um Druck auf das gebackene Produkt auszuüben, damit es aus der oberen Form (2) fällt.

6. Verfahren zur Herstellung eines gebackenen Konfektproduktes durch Transportieren einer Einheit (1) aus zusammenpassenden Formen, die ein Paar Formen (2, 3) umfasst, von denen jede eine Formhöhlung (2b, 3b) hat, in welche Teig eingefüllt wird, umfassend die folgenden Schritte:
einen Schritt (17) zum Einfüllen von Teig in die Formhöhlungen (2b, 3b) der Formen (2, 3);
einen Schritt (21) zum Zusammensetzen der Formen (2, 3) ;
einen Schritt (25) zum Erwärmen der zusammengesetzten Formen (2, 3) von der Rückseite der Formeneinheit (1) aus, während diese zum Backen des Teigs von beiden Seiten umgedreht (27) wird und
einen Schritt (30) zum Öffnen der zusammengesetzten Formen (2, 3) und des Herausnehmen eines gebackenen Produktes aus der Formeneinheit (1);
wobei der Schritt (30, 61) zum Herausnehmen des Produktes die folgenden Schritte umfasst:
einen Schritt (31) zum Bilden eines Zwischenraums (d) zwischen den Formen (2, 3);
einen Schritt (33) zum Blasen von Luft zu der Formhöhlung (2b) der oberen Form (2) durch den Zwischenraum (d), sodass das Produkt, das in der oberen Form (2) geblieben ist, in die untere Form (3) fällt, und
einen Schritt (50) zum vollständigen Drehen der oberen Form (2) nach Stecken eines Greifelements (38) in das Produkt in der unteren Form (3), um so das Produkt in der unteren Form (3) zu halten.

7. Verfahren zur Herstellung eines gebackenen Konfektproduktes durch Transportieren einer Einheit (1) aus zusammenpassenden Formen, die ein Paar Formen (2, 3) umfasst, von denen jede eine Formhöhlung (2b, 3b) hat, in welche Teig eingefüllt wird, gemäß Anspruch 6,
wobei der Schritt zum Blasen von Luft in dem Schritt zur Herausnahme des Produktes die folgenden Schritte umfasst:
einen ersten Schritt zum Blasen von Luft zu dem gebackenen Produkt in der Formhöhlung (2b) der oberen Form (2), um das gebackene Produkt zu schrumpfen, und
einen zweiten Schritt zum Blasen von Luft zu der Höhlung (2b) der oberen Form (2), um auf das gebackene Produkt Druck auszuüben, sodass es aus der oberen Form (2) fällt.

## Revendications

1. Appareil (10) destiné à fabriquer un produit de pâtisserie cuite à l'aide d'une unité de matrices qui s'accouplent (1) qui comprend une paire de matrices (2, 3), chacune d'elles présentant une cavité de matrice (2b, 3b) dans laquelle une pâte est déposée, comprenant :
➢ des moyens de transfert circulants (13) de ladite unité de matrices (1) ;
➢ des moyens de dépôt de la pâte (17) ;
➢ des moyens de chauffage (25) de ladite unité de matrices (1) ;
➢ des moyens d'accouplement (21) desdites matrices (2, 3) ;
➢ des moyens d'ouverture (30) desdites matrices (2, 3) ; et
➢ des moyens de maintien d'un produit cuit dans la matrice inférieure (3) lors de l'ouverture des matrices ;
dans lequel lesdits moyens de maintien d'un produit cuit comprennent:
➢ des moyens (31) destinés à former un intervalle entre lesdites matrices (2, 3) ; **caractérisé en ce que** lesdits moyens de maintien d'un produit cuit comprennent en outre :
➢ une buse (33, 34) destinée à souffler de l'air dans ladite cavité de matrice (2b) de la matrice supérieure (2) à travers l'intervalle (d), en forçant le produit de pâtisserie cuite qui reste dans la matrice supérieure à tomber dans la matrice inférieure (3) ; et
➢ des moyens (37) destinés à enfoncer un élément de griffe (38) dans une partie latérale du produit de pâtisserie cuite à travers l'intervalle (d) de manière à maintenir le produit de pâtisserie cuite dans la matrice inférieure (3).

2. Appareil (10) destiné à fabriquer un produit de pâtisserie cuite selon la revendication 1,
dans lequel lesdits moyens de transfert circulants (13) sont un convoyeur à glissière (13), et
lesdits moyens de formation d'intervalle (31) sont un rail (31) disposé sur le rail latéral dudit convoyeur à glissière (13) et qui s'étend parallèle audit convoyeur à glissière (13),
dans lequel la matrice supérieure (2) circule sur ledit rail (31) quand elle est transférée par ledit convoyeur à glissière (13), en provoquant la création d'un intervalle (d) entre les matrices supérieure et inférieure (2, 3), et
ladite buse (33, 34), qui est disposée le long dudit intervalle (d), souffle de l'air vers ladite cavité de matrice (2b) de la matrice supérieure (2).

3. Appareil (10) destiné à fabriquer un produit de pâtisserie cuite selon la revendication 1 ou la revendication 2, dans lequel lesdits moyens destinés à enfoncer une griffe (37) peuvent glisser dans une direction perpendiculaire à la direction de transfert desdits moyens de transfert circulants (13).

4. Appareil destiné à fabriquer un produit de pâtisserie cuite selon l'une quelconque des revendications 1 à 3, dans lequel lesdits moyens de transfert circulants (13) transfèrent lesdites unités de matrices qui s'accouplent (1) dans un état dans lequel lesdites unités de matrices qui s'accouplent (1) sont disposées de manière longitudinale.

5. Appareil destiné à fabriquer un produit de pâtisserie cuite selon l'une quelconque des revendications 1 à 4, dans lequel deux desdites buses (34) sont placées le long desdits moyens de transfert circulants (13) de manière continue, dans lequel la première buse (34) souffle de l'air vers le produit cuit dans ladite cavité de matrice (2b) de la matrice supérieure (2) de manière à contracter le produit cuit, et la seconde buse (34) souffle de l'air dans ladite cavité (2b) de la matrice supérieure (2) de manière à forcer le produit cuit à tomber à partir de la matrice supérieure (2).

6. Procédé destiné à fabriquer un produit de pâtisserie cuite en transférant une unité de matrices qui s'accouplent (1) qui comprend une paire de matrices (2, 3), chacune d'elles présentant une cavité de matrice (2b, 3b) dans laquelle la pâte est déposée, comprenant les étapes suivantes :
➢ une étape (17) consistant à déposer de la pâte dans les cavités de matrices (2b, 3b) des matrices (2, 3) ;
➢ une étape (21) consistant à accoupler les matrices (2, 3) ;
➢ une étape (25) consistant à chauffer lesdites matrices accouplées (2, 3) à partir de la surface arrière de ladite unité de matrices (1) tout en étant renversées (27) de manière à cuire ladite pâte à partir des deux côtés ; et
➢ une étape (30) consistant à ouvrir lesdites matrices accouplées (2, 3) et à sortir un produit cuit hors de ladite unité de matrices (1) ;
dans lequel l'étape (30, 61) consistant à sortir le produit comprend les étapes suivantes ;
➢ une étape (31) consistant à former un intervalle (d) entre lesdites matrices (2, 3) ;
➢ une étape (33) consistant à souffler de l'air dans ladite cavité de matrice (2b) de la matrice supérieure (2) à travers l'intervalle (d), de telle sorte que le produit qui reste dans la matrice supérieure (2) tombe dans la matrice inférieure (3) ; et
➢ une étape (50) consistant à tourner complètement la matrice supérieure (2) après avoir enfoncé l'élément de griffe (38) dans le produit qui se situe dans la matrice inférieure (3) de manière à maintenir le produit dans la matrice inférieure (3).

7. Procédé destiné à fabriquer un produit de pâtisserie cuite en transférant une unité de matrices qui s'accouplent (2) qui comprend une paire de matrices (2, 3), chacune d'elles présentant une cavité de matrice (2b, 3b) dans laquelle la pâte est déposée, selon la revendication 6 :
dans lequel ladite étape consistant à souffler de l'air dans l'étape consistant à sortir le produit, comprend les étapes suivantes :
➢ une première étape consistant à souffler de l'air vers le produit cuit dans ladite cavité de matrice (2b) de la matrice supérieure (2) de manière à contracter le produit cuit ; et
➢ une seconde étape consistant à souffler de l'air vers ladite cavité (2b) de la matrice supérieure (2) de manière à forcer le produit cuit à tomber à partir de la matrice supérieure (2).
